# FASCICULE DE BREVET EUROPEEN

(11) **EP 1 022 861 B1**
(45) Date de publication et mention de la délivrance du brevet: **16.04.2008**
(21) Numéro de dépôt: 00400092.3
(22) Date de dépôt: 14.01.2000
(51) Int. Cl.: H04B 1/40, H04B 1/10

(54) **PROCEDE ET DISPOSITIF DE RECEPTION D'UN SIGNAL RADIOFREQUENCE DANS UN TELEPHONE MOBILE A DEUX BANDES**
VERFAHREN UND VORRICHTUNG ZUM EMPFANG VON RF SIGNALEN IN EINEM ZWEIBAND MOBILTELEFON
METHOD AND DEVICE FOR RECEPTION OF RF SIGNALS IN A DUAL BAND MOBILE TELEPHONE

(30) Priorité: 20.01.1999 FR 9900741
(43) Date de publication de la demande: 26.07.2000
(73) Titulaire: SAGEM Communication, 75015 Paris (FR)
(72) Inventeur: Romao, M. Fernando, 8, place du Ponceau, 95000 Cergy (FR)
(74) Mandataire: Schmit, Christian Norbert Marie

(56) Documents cités:
- EP-A- 0 300 173
- EP-A- 0 814 567

## Description

La présente invention a pour objet un procédé et un dispositif de réception d'un signal radiofréquence dans un téléphone mobile. Elle trouve particulièrement son application dans la téléphonie mobile, notamment dans un téléphone mobile. On obtient ainsi dans un dispositif de réception du téléphone mobile un nombre réduit d'éléments. Un but de l'invention est de réaliser un dispositif de réception permettant de simplifier une architecture d'un dispositif de réception tout en augmentant un rapport signal à bruit. Un autre but est d'augmenter une autonomie d'une source d'alimentation du téléphone mobile. De plus, on diminue ainsi un coût de fabrication du téléphone mobile.

Actuellement, un dispositif de réception, notamment d'un téléphone mobile, comporte un filtre passe-bande amont, un filtre passe-bande aval, ainsi qu'un amplificateur à faible bruit et une antenne d'émission réception. Une entrée de l'amplificateur à faible bruit est reliée à une sortie du filtre passe-bande amont. Une sortie de l'amplificateur à faible bruit est reliée à une entrée du filtre passe-bande aval. Une entrée du filtre passe-bande amont est reliée quant à elle à l'antenne du téléphone mobile. Une sortie du filtre passe-bande aval est généralement reliée à une première entrée d'un mélangeur. Ce mélangeur est généralement le premier élément d'un dispositif de démodulation. Le mélangeur peut être à réjection d'image. Un signal à une fréquence image est un signal parasite présent en sortie du mélangeur et dont une valeur de fréquence est égale à la valeur de fréquence du signal en sortie du filtre passe-bande aval moins une valeur de fréquence d'un oscillateur relié à une deuxième entrée du mélangeur. Dans ce cas le filtre passe-bande aval est inutile. En général, les deux filtres passe-bande sont présents. Ainsi, on répartit une sélectivité globale voulue, pour ce dispositif de réception, sur les deux filtres passe-bande amont et aval. Si le filtre passe-bande aval n'est pas présent, ou s'il est inutile, le filtre passe-bande amont doit être plus sélectif pour que la sélectivité globale voulue soit atteinte. Or un filtre est d'autant plus coûteux qu'il est sélectif. L'amplificateur à faible bruit et le mélangeur sont, de par leur fonctionnement, des circuits non linéaires. Ainsi les deux filtres passe-bande amont et aval évitent des problèmes de saturation de ces circuits ou des mélanges de fréquences parasites.

Cette solution présente des problèmes. En effet, les deux filtres passe-bande amont et aval introduisent des pertes. Ces pertes se traduisent par une diminution d'un rapport signal à bruit et donc par une augmentation d'un taux d'erreur binaire. En outre, un dispositif de réception comportant certains éléments électroniques est définie par un facteur de bruit. Le facteur de bruit caractérise l'aptitude du récepteur à recevoir des signaux de faible puissance, notamment de l'ordre de -100 dBm. Avec cette structuration du dispositif de réception le facteur de bruit global du dispositif de réception dépend principalement d'un facteur de bruit des filtres passe-bande amont et aval et d'un facteur de bruit de l'amplificateur à faible bruit. Les deux valeurs de facteur de bruit les plus importantes sont celles du filtre passe-bande et de l'amplificateur à faible bruit. Le facteur de bruit du filtre passe-bande aval est masqué par le gain élevé de l'amplificateur à faible bruit. Ainsi on obtient un facteur de bruit global de l'ordre d'un produit entre le facteur de bruit du filtre passe-bande amont et un facteur de bruit de l'amplificateur à faible bruit. En fait, à ce bruit global viennent s'ajouter d'autres bruits qui diminuent encore le rapport signal à bruit. Ainsi, même si tous les autres bruits peuvent être annulés ou compensés, alors il restera toujours un facteur de bruit égal au produit précédent. Ceci définit un seuil minimum de détection qui actuellement est de l'ordre de -106 dBm pour des signaux de la norme DCS ou PCS et de l'ordre de -109 dBm pour des signaux de la bande GSM.

De plus, réaliser un filtre passe-bande sélectif coûte cher. Un dispositif de réception comporte deux filtres passe-bande sélectifs. Or avec une telle architecture dans un téléphone mobile multibande, on a autant de filtres passe-bande amont que de bandes à sélectionner. Dans certains cas, une entrée d'un amplificateur à faible bruit est reliée à des sorties de filtres passe-bande amont dont les bandes de fréquences sont proches. Deux bandes de fréquences sont proches lorsque, pour les normes précitées, elles sont à moins d'une centaine de mégaHerzt l'une de l'autre. Il en est ainsi, par exemple, d'une bande de fréquences associée à la norme DCS et d'une bande de fréquences associée à la norme PCS dont les valeurs des largeurs des bandes de fréquences vont de 1805 à 1880 MHz et de 1930 à 1990 MHz respectivement. Ainsi deux filtres passe-bande amont associés à ces bandes de fréquences sont reliés à un même amplificateur à faible bruit. Un filtre passe-bande amont associé à une bande de fréquences selon la norme GSM, par exemple et dont une valeur de fréquence est comprise entre 925 et 960 MHz, a une sortie reliée à un autre amplificateur à faible bruit. Les bandes de fréquences citées ci-dessus s'entendent comme étant des bandes de fréquences destinées à une réception d'un signal par un téléphone mobile.

Ainsi une telle architecture comporte trois filtres passe-bande amont, deux amplificateurs à faible bruit, et deux filtres passe-bande aval. On obtient ainsi deux voies dédiées de réception, une première voie dédiée destinée au traitement d'un signal émis dans la bande GSM et une deuxième voie dédiée destinée au traitement d'un signal émis dans la bande DCS ou PCS. En outre, une valeur de fréquence centrale des filtres passe-bande amont et aval est fixe. Pour permettre de sélectionner une des deux voies un circuit de commutation, ou diplexeur, est utilisé. Ce diplexeur comporte une entrée reliée à l'antenne et deux sorties chacune étant reliée à une voie de réception. Si on veut recevoir des signaux dans une autre bande de fréquence il faut ajouter autant de filtres passe-bande amont que de nouvelles bandes à sélectionner et éventuellement un autre amplificateur à faible bruit dans le cas où la bande de fréquence ne serait proche d'aucune des autres bandes de fréquence.

La présente invention propose de remédier à ces problèmes en réalisant un dispositif de réception dans lequel on diminue un nombre de filtres et on obtient un seuil minimum de détection plus bas, et donc un facteur de bruit global meilleur. Pour ce faire, dans l'invention, on relie l'antenne du téléphone mobile à une entrée d'un seul amplificateur à faible bruit. L'amplificateur à faible bruit est réalisé de manière à ce qu'une bande passante de cet amplificateur soit suffisante pour laisser passer indifféremment des signaux dans la bande GSM ou DCS ou PCS dans le cas par exemple d'un téléphone mobile réalisé pour recevoir des signaux issus de ces trois bandes de fréquences. Cela signifie qu'une bande passante d'un tel amplificateur doit être de 925 à 1990 MHz.

Dans l'état de la technique, un point de compression à 1 dB d'un amplificateur à faible bruit est de l'ordre de -15 dBm. Le point de compression à 1 dB permet de connaître quelle valeur de puissance du signal en entrée de l'amplificateur produit un écart de linéarité d'amplification de cet amplificateur de 1 dB. Ce point correspond donc à un début de saturation de l'amplificateur à faible bruit. En effet, un filtre passe-bande amont étant absent, l'amplitude des signaux en entrée n'est plus atténuée de façon à éviter la saturation de l'amplificateur à faible bruit. Dans l'invention un point de compression à 1 dB de cet amplificateur à faible bruit est de l'ordre de ou supérieur à 0 dBm.

Cette augmentation de linéarité de l'amplificateur à faible bruit se traduit par une consommation en courant plus élevée. Pour remédier à ce problème l'invention propose en outre un procédé de réception dans lequel on va réguler une valeur de courant et ou de tension de polarisation de l'amplificateur à faible bruit. La régulation dépend d'une mesure du facteur de bruit. Un autre exemple de l'état de la technique décrivant un récepteur à deux bandes est EP 0300173.

La présente invention concerne donc un dispositif de réception d'un signal radiofréquence dans un téléphone mobile comportant:
- une antenne,
- un amplificateur à faible bruit avec une entrée et une sortie, et
- un dispositif de filtrage passe-bande aval,
caractérisé en ce que
- l'entrée de l'amplificateur à faible bruit est directement reliée à l'antenne par un câble conducteur,
- le dispositif de filtrage passe-bande aval comporte un premier filtre passe-bande aval centré sur une fréquence centrale F₁ et un deuxième filtre passe-bande aval centré sur une fréquence centrale F₂,
et en ce que
- la fréquence F₂ est de l'ordre du double de la fréquence F₁,
- la sortie de l'amplificateur est reliée à une entrée du premier filtre passe-bande aval et à une entrée du deuxième filtre passe-bande aval.

L'invention a également pour objet un procédé de réception d'un signal radiofréquence, notamment dans un téléphone mobile, dans lequel
- on reçoit sur une antenne le signal radiofréquence et on l'amplifie avec un amplificateur à faible bruit,
caractérisé en ce que
- on mesure une valeur représentative d'une puissance de bruit en sortie de l'amplificateur,
- et on régule une valeur de courant et ou de tension de polarisation de l'amplificateur en fonction de cette valeur représentative.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : un dispositif de réception selon l'état de la technique ;
- Figure 2 : un dispositif de réception selon l'invention.

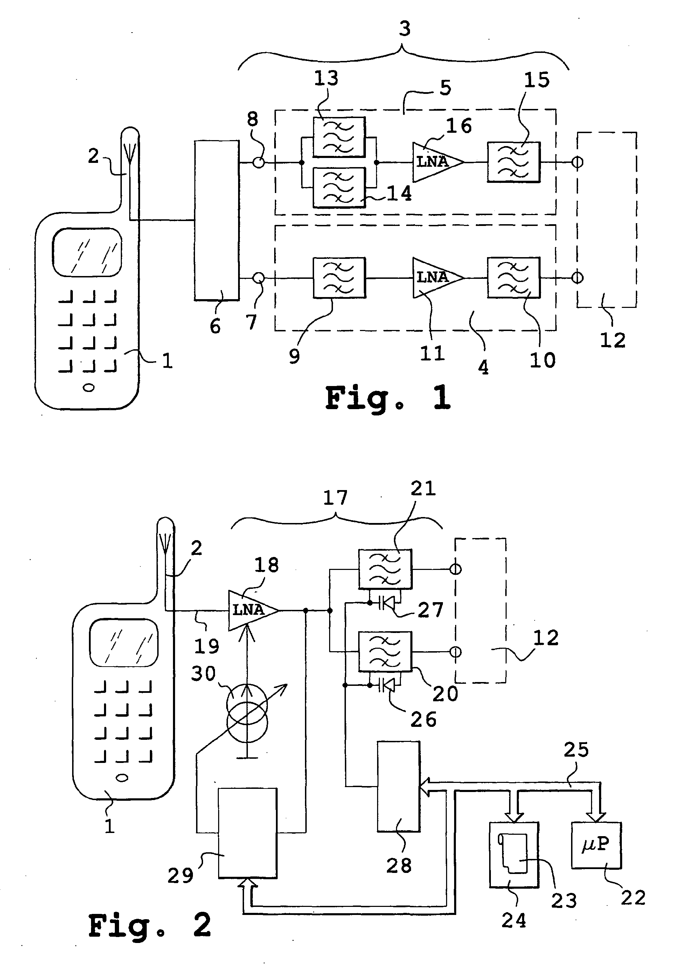

La figure 1 montre un téléphone mobile 1 selon l'état de la technique. Ce téléphone mobile 1 comporte une antenne 2 et un dispositif de réception 3. Actuellement, les téléphones mobiles peuvent émettre et/ou recevoir des signaux radioélectriques selon plusieurs normes telles que la norme GSM, AMPS, DCS, PCS, DECT, UMTS, ou d'autres encore. Des signaux émis et/ou reçus suivant la norme GSM ou AMPS sont des signaux à une fréquence de l'ordre de 900 MHz. Des signaux émis suivant la norme DCS, PCS, UMTS ou DECT sont quant à eux des signaux à une fréquence de l'ordre de 1900 MHz. Dans ce cas, le dispositif de réception 3 comporte dans l'état de la technique deux voies dédiées 4 et 5 de réception. La voie dédiée 4 permet de recevoir des signaux à une fréquence de l'ordre de 900 MHz. La voie dédiée 5 permet de recevoir des signaux à une fréquence de l'ordre de 1900 MHz. Une liaison entre ces deux voies et l'antenne 2 est réalisée par l'intermédiaire d'un circuit diplexeur 6 avec une entrée et deux sorties 7 et 8. L'entrée du circuit diplexeur 6 est reliée à l'antenne 2. Les sorties 7 et 8 du circuit diplexeur 6 sont reliées aux voies dédiées 4 et 5 respectivement. Dans un exemple, on considère que le téléphone mobile 1 peut recevoir des signaux à une fréquence selon la norme GSM, DCS ou PCS. Le circuit diplexeur 6 permet de sélectionner la voie dédiée 4 ou 5 à utiliser à la demande. Dans le cas d'un signal émis selon la norme GSM le circuit diplexeur 6 relie l'antenne 2 à la sortie 7. La voie dédiée 4 comporte un filtre passe-bande amont 9, un filtre passe-bande aval 10 et un amplificateur à faible bruit 11. Les filtres passe-bande amont 9 et aval 10 sont centrés sur une fréquence permettant de sélectionner la bande de fréquences définie dans la norme GSM. Une entrée du filtre passe-bande amont 9 est reliée à la sortie 7 du circuit diplexeur 6. La sortie de ce filtre passe-bande amont 9 est reliée à une entrée de l'amplificateur à faible bruit 11. Ce filtre passe-bande amont 9 permet, excepté sa fonction de filtrage, d'éviter que des signaux reçue par l'antenne 2 ne soient transmis à l'amplificateur à faible bruit 11 avec une valeur de puissance trop grande. En général, une puissance maximale admissible en entrée de l'amplificateur à faible bruit 11 est de l'ordre de -15 dBm. Ainsi, ce filtre passe-bande amont 9 permet à l'amplificateur à faible bruit 11 de fonctionner d'une manière linéaire et ce tant qu'un point de compression à 1 dB, de l'ordre de -15 dBm, n'est pas atteint. Une sortie de l'amplificateur à faible bruit 11 est reliée à une entrée du filtre passe-bande aval 10. Une sortie de ce filtre 10 est reliée à une entrée d'un circuit de démodulation 12 du téléphone mobile 1. Le filtre passe-bande aval 10 permet de filtrer des signaux parasites que l'amplificateur à faible bruit 11 pourrait produire. Dans le cas contraire ces signaux parasites seraient envoyés au circuit de démodulation 12. Ainsi, ces deux filtres passe-bande amont 9 et aval 10 doivent pouvoir atténuer des signaux parasites, tels que des signaux émis par d'autres téléphones mobiles, d'au moins 15 dB.

La voie dédiée 5, traitant des signaux émis selon la norme DCS ou PCS, comporte deux filtres passe-bande amont 13 et 14 montés en parallèle, un filtre passe-bande aval 15 et un amplificateur à faible bruit 16. Le filtre passe-bande amont 13 est centré sur une valeur de fréquence permettant de sélectionner la bande de fréquences définie dans la norme DCS. Le filtre passe-bande amont 14 permet de sélectionner la bande de fréquences définie dans la norme PCS. Les entrées des filtres passe-bande amont 13 et 14 sont reliées à la sortie 8 du circuit diplexeur 6. Les sorties de ces filtres passe-bande amont 13 et 14 sont reliées à une entrée de l'amplificateur à faible bruit 16. Une sortie de cet amplificateur à faible bruit 16 est reliée à une entrée du filtre passe-bande aval 15. La sortie de ce filtre passe-bande aval 15 est reliée à une autre entrée du circuit de démodulation 12. Le fonctionnement de la voie dédiée 5 est identique au fonctionnement de la voie dédiée 4 sauf qu'elle s'applique aux normes DCS et PCS.

On précise en outre que les filtres passe-bande 9, 10, 13, 14 et 15 sont centrés sur une valeur de fréquence fixe. Dans ce cas, une fois le téléphone mobile 1 réalisé, on ne peut plus modifier les valeurs de fréquence centrales des filtres. Ainsi, avec une telle architecture figée du dispositif de réception 3, on peut détecter des signaux dont une valeur de puissance est de l'ordre de -106 dBm.

La figure 2 montre le téléphone mobile 1 selon l'invention. Dans l'invention, le téléphone mobile 1 comporte un dispositif de réception 17. Ce dispositif de réception 17 comporte un amplificateur à faible bruit 18 avec une entrée et une sortie. L'entrée de cet amplificateur à faible bruit 18 est reliée directement à l'antenne 2 du téléphone mobile 1 par un câble conducteur 19. Le dispositif de réception 17 comporte en outre deux filtres passe-bande aval 20 et 21 avec une entrée et une sortie. Les entrées des filtres passe-bande aval 20 et 21 sont reliées à la sortie de l'amplificateur à faible bruit 18. Ces filtres passe-bande aval 20 et 21 sont centrés sur des fréquences F1 et F2 respectivement. La valeur de la fréquence F2 est de l'ordre du double de la valeur de la fréquence F1. Dans un exemple, le téléphone mobile 1 peut recevoir des signaux émis suivant la norme GSM ou suivant la norme PCS. La fréquence F1 est telle qu'elle permet de sélectionner la bande définie par la norme GSM et la fréquence F2 permet de sélectionner la bande définie par la norme PCS. Dans l'invention le dispositif de réception 17 ne comporte pas de filtre passe-bande amont afin de filtrer et atténuer des signaux reçus sur l'antenne 2, selon une valeur de fréquence à laquelle ils ont été émis. Ainsi l'amplificateur à faible bruit 18 est réalisé de manière différente aux amplificateurs à faible bruit 11 et 16. En conséquence, des signaux en entrée de l'amplificateur à faible bruit 18 peuvent avoir une valeur de puissance supérieure à -15dBm. Pour ces raisons, un point de compression à 1 dB de l'amplificateur à faible bruit 18 ainsi réalisé est au minimum de 0 dBm. En conséquence de quoi, des signaux reçus sur l'antenne 2 et dont une valeur de puissance est supérieure à -15 dBm ne saturent pas l'amplificateur à faible bruit 18.

En outre, comme il n'y a pas, dans l'invention de filtre passe-bande amont alors tous les signaux reçus par l'antenne 2 sont appliqués en entrée de l'amplificateur à faible bruit 18. Une sélection de la bande utile est faite par les filtres passe-bande aval 20 et 21. Ainsi l'amplificateur 18 doit pouvoir laisser passer des signaux dont une valeur de fréquence se trouve dans une bande GSM ou PCS ce qui implique une bande passante de cet amplificateur à faible bruit 18 très nettement supérieure à la bande passante des amplificateurs à faible bruit 11 et 16. Dans cet exemple, l'amplificateur à faible bruit 18 doit avoir une bande passante qui va de 925 MHz à 1990 MHz. Ceci n'est qu'un exemple, en effet, dans un autre exemple, si on désire recevoir des signaux émis selon la norme GSM ou AMPS ou PCS ou DCS ou DECT dans ce cas la bande passante de l'amplificateur à faible bruit 18 doit aller de 869 MHz à 1990 MHz. La valeur de 869 MHz correspond à la plus faible valeur de fréquence de la bande de fréquences AMPS. La valeur de 1990 MHz correspond à la plus grande valeur de fréquence de la bande de fréquences PCS. Dans ce cas il y a autant de filtres passe-bande aval que de bandes de fréquences à sélectionner, c'est à dire dans cet exemple six.

Dans une variante préférée, les fréquences centrales F1 et ou F2 des filtres passe-bande aval 20 et 21 respectivement sont variables. Ainsi, le dispositif de l'invention comporte un microprocesseur 22 commandé par un programme 23 placé dans une mémoire de programme 24 et ce par l'intermédiaire d'un bus 25. Une valeur d'une fréquence F1 et ou F2 est sélectionnée à la demande par l'intermédiaire du microprocesseur 22 commandé par le programme 23. Ceci a pour conséquence de réduire le nombre de filtres passe-bande aval à deux, voire à un seul filtre passe-bande aval.

Chaque filtre passe-bande aval 20 ou 21 comporte une diode Varicap 26 ou 27 respectivement avec une anode et une cathode. Une valeur de capacité des condensateurs équivalents de ces diodes Varicap 26 et 27 est utilisée par les filtres 20 et 21 afin de sélectionner une fréquence centrale F1 ou F2 respectivement. Dans un exemple préféré, les fréquences F1 et F2 sont rendues variables grâce à une application d'un potentiel sur les cathodes des diodes Varicap 26 et 27. On aurait tout aussi bien pu appliquer les potentiels sur les anodes des diodes Varicap 26 et 27. Pour ce faire le dispositif de l'invention comporte un dispositif d'alimentation 28. Ce dispositif d'alimentation 28 reçoit sur une entrée, du microprocesseur 22, une information relative à une valeur de potentiel à appliquer aux diodes Varicap 26 et 27 et ce par l'intermédiaire du bus 25. Ce dispositif d'alimentation 28 comporte une sortie reliée dans un exemple préféré aux cathodes des diodes Varicap 26 et 27. Dans l'exemple préféré ce dispositif d'alimentation 28 est un convertisseur numérique analogique dont une entrée de commande est reliée au microprocesseur 22. Ce dispositif d'alimentation 28 a donc en charge de convertir une information, issue du microprocesseur 22, relative à une valeur de potentiel en un signal comportant au moins autant de valeurs de potentiel que de fréquences à sélectionner. Ainsi en fonction d'une valeur de potentiel sur les cathodes des diodes Varicap 26 ou 27 on obtient une fréquence F1 ou F2 permettant de sélectionner une bande de fréquences parmi toutes celles disponibles.

Dans le cas où on utilise deux filtres passe-bande aval, par exemple les filtres 20 et 21, alors avec le microprocesseur 22 on fait varier la fréquence F1 du filtre passe-bande aval 20 pour sélectionner soit la bande de fréquences GSM soit la bande AMPS. Avec le filtre passe-bande aval 21 on peut sélectionner une bande de fréquences parmi les bandes de fréquences DCS, DECT, PCS et UMTS. Dans cet exemple préféré, des bandes de fréquences réduites permettent de réaliser des filtres passe-bande aval plus simples. En effet, une contrainte quant à la sélectivité de ces filtres est moins importante que si un seul filtre passe-bande est utilisé ce qui augmente une bande passante dans laquelle la contrainte de sélectivité doit être respectée. Dans ce dernier cas le filtre passe-bande doit être sélectif de 869 MHz à 1990 MHz tout en sachant qu'une fréquence centrale de ce filtre est variable.

Dans l'état de la technique on ne peut pas augmenter la sélectivité des filtres 9, 13 et 14 car celle-ci s'accompagne d'une dégradation du signal. Dans l'invention cette dégradation du signal est compensée par le fait que le signal reçu par l'antenne 2 est d'abord amplifié par l'amplificateur à faible bruit 18 puis filtré par l'un des filtres 20 ou 21. Ainsi, on peut augmenter la sélectivité des filtres 20 et 21 car la dégradation apportée au signal est négligeable en regard de l'amplification que le signal a subi.

Les caractéristiques de bandes passantes et de linéarité imposées à l'amplificateur à faible bruit 18 de l'invention ont pour conséquence une augmentation du courant de polarisation de l'amplificateur à faible bruit 18. Ainsi on met en oeuvre, notamment dans le téléphone mobile 1, un procédé de réception d'un signal radiofréquence. Ainsi dans ce procédé on reçoit sur l'antenne 2 le signal radiofréquence. On amplifie ce signal radiofréquence avec l'amplificateur à faible bruit 18 et on mesure une valeur représentative d'une puissance de bruit en sortie de l'amplificateur. En fonction de cette valeur mesurée on régule une valeur du courant et/ou de tension de polarisation de l'amplificateur à faible bruit 18. En effet, plus une puissance de bruit est importante et plus un courant consommé par l'amplificateur à faible bruit 18 est important. Dans l'invention une valeur du courant consommé par l'amplificateur à faible bruit 18 est de l'ordre de 30 milliampères au lieu de 5 à 10 milliampères pour l'état de la technique. Ainsi lorsqu'une puissance de bruit est faible on diminue la consommation en courant électrique de l'amplificateur à faible bruit 18. Ceci est notamment le cas lorsqu'il n'y a pas de téléphones mobiles à proximité du téléphone mobile 1 qui émettent dans le même temps en utilisant des valeur de fréquence dans la même bande de fréquences. Dans l'invention, le téléphone mobile 1 comporte un dispositif 29 de mesure permettant de mesurer une puissance de bruit ou une valeur représentative de cette puissance de bruit dont une entrée est reliée à la sortie de l'amplificateur à faible bruit 18. Une sortie de ce dispositif 29 permet de réguler une valeur de courant et ou de tension issue d'une source 30 de courant ou de potentiel en fonction de cette valeur représentative. Dans la pratique cette source 30 de courant ou de potentiel variable est un transistor notamment bipolaire. Ce transistor fonctionne dans un régime linéaire dont la base est reliée à la sortie du dispositif 29 de mesure permettant de modifier ainsi une valeur du courant délivré par ce transistor.

Dans un exemple préféré on met en oeuvre ce procédé dans un téléphone mobile. On pourrait très bien mettre en oeuvre ce procédé dans tout autre dispositif de réception d'un signal radiofréquence tel que par exemple un téléviseur ou un magnétoscope.

Dans l'état de la technique une liaison entre l'antenne 2 et les filtres 9, 13 et 14 est une liaison adaptée avec une impédance caractéristique notamment de 50 ohms. Ainsi si un utilisateur touche l'antenne 2 avec ses doigts ou tout du moins s'en approche, alors on aura une désadaptation de la liaison entre l'antenne 2 et les filtres passe-bande amont 9, 13 et 14 due à une variation locale de l'impédance caractéristique de cette liaison. Cette désadaptation se traduit par une perte de sensibilité des filtres passe-bande amont pouvant aller jusqu'à une valeur de 6 voire 7 dB de perte de sensibilité. Dans l'invention on réalise une liaison adaptée directement entre l'antenne 2 et l'amplificateur à faible bruit 18. Dans ce cas il n'y a plus de problème de sensibilité des filtres passe-bande amont. Une tolérance quant à la réalisation de l'adaptation de la liaison entre l'antenne 2 et l'amplificateur à faible bruit 18 est plus grande qu'entre l'antenne 2 et les filtres 9, 13 et 14 de l'état de la technique. Ce qui revient à dire que le dispositif de réception 17 est moins sensible à des variations d'impédance en entrée de l'amplificateur à faible bruit 18 qu'en entrée des filtres passe-bande amont 9,13 ou 14.

Ainsi avec l'invention on augmente la sensibilité du dispositif de réception. En effet dans l'état de la technique pour des bandes de fréquences répondant à la norme DCS ou PCS on a un seuil de détection minimum de l'ordre de -106 dBm alors que dans l'invention le seuil de détection minimum passe à -111 dBm. Ceci représente environ un rapport de puissance de 3 c'est à dire qu'on peut détecter des signaux dont une valeur de puissance est trois fois plus faible. Dans la bande répondant à la norme GSM on passe d'un seuil de détection minimum de l'ordre de -109 dBm à un seuil de détection minimum de l'ordre de -112 dBm. Dans ce cas cela signifie qu'on peut détecter des signaux dont une valeur de puissance est environ fois plus faible.

## Revendications

1. - Dispositif de réception (17) d'un signal radiofréquence dans un téléphone mobile (1) comportant :
- une antenne (2),
- un amplificateur à faible bruit (18) avec une entrée et une sortie, et
- un dispositif de filtrage passe-bande aval (20, 21),
- l'entrée de l'amplificateur à faible bruit (18) est directement reliée à l'antenne (2) par un câble conducteur (19),
- le dispositif de filtrage passe-bande aval comporte un premier filtre passe-bande aval (20) centré sur une fréquence centrale F₁ et un deuxième filtre passe-bande aval (21) centré sur une fréquence centrale F₂,
**caractérisé en ce qu'**il comporte des moyens pour que les fréquences F₁ et ou F₂ soient variables, et un microprocesseur (22) pour sélectionner une valeur de F₁ et / où F₂ à la demande,
et **en ce que**
- la fréquence F₂ est de l'ordre du double de la fréquence F₁,
- la sortie de l'amplificateur (18) est reliée à une entrée du premier filtre passe-bande aval (20) et à une entrée du deuxième filtre passe-bande aval (21),
- une valeur du courant consommé par l'amplificateur est régulée en fonction d'une mesure d'une valeur représentative d'une puissance de bruit en sortie de l'amplificateur.

2. - Dispositif de réception selon la revendication 1, **caractérisé en ce que**, pour faire varier les fréquences F₁ et / ou F₂ chaque filtre comporte une diode varicap (26, 27) avec une anode et une cathode et
**en ce que** l'anode et / ou la cathode de ces diodes varicap sont reliées à un dispositif d'alimentation (28), notamment un convertisseur numérique analogique, avec une entrée de commande reliée au microprocesseur (22).

3. - Dispositif de réception selon l'une des revendications 1 et 2,
**caractérisé en ce que**
- la fréquence F₁ du premier filtre passe-bande aval (20) est une fréquence comprise dans une bande de fréquence allant de 869 MHz à 960 MHz,
- la fréquence F₂ deuxième filtre passe-bande aval (21) est une fréquence comprise dans une bande de fréquence allant de 1805 MHz à 1990 MHz.

4. - Procédé de réception d'un signal radiofréquence, notamment dans un téléphone mobile, dans lequel
- on reçoit sur une antenne (2) le signal radiofréquence et on l'amplifie avec un amplificateur (18) à faible bruit,
**caractérisé en ce que**
- on transmet ce signal radiofréquence en entrée d'un premier filtre passe-bande aval (20) centré sur une fréquence centrale F₁ **variable** et un deuxième filtre passe-bande aval (21) centré sur une fréquence centrale F₂ variable, la fréquence F₂ étant de l'ordre du double de la fréquence F₁,
- on sélectionne une valeur de la fréquence F1 et/ou F2 par l'intermédiaire d'un microprocesseur (22) commandé par un programme (23),
- on mesure une valeur représentative d'une puissance de bruit en sortie de l'amplificateur (18),
- et on régule une valeur de courant et ou de tension de polarisation de l'amplificateur (18) en fonction de cette valeur représentative.

5. - Procédé de réception d'un signal radiofréquence selon la revendication 4 **caractérisé en ce que**
- on met en oeuvre le procédé dans un téléphone mobile (1).

## Claims

1. - Device for the reception (17) of a radiofrequency signal in a mobile telephone (1) comprising:
- an antenna (2),
- a low-noise amplifier (18) with one input and one output, and
- a downstream bandpass filtering device (20, 21)
- the input of the low-noise amplifier (18) is directly connected to the antenna (2) by a conductive cable (19)
- the downstream bandpass filtering device has a first downstream bandpass filter (20) centred on a centre frequency F₁ and a second downstream bandpass filter (21) centred on a centre frequency F₂,
**characterised in that** it comprises means so that the frequencies F₁ and F₂ are variable, and a microprocessor (22) to select a value of F₁ and/or F₁ at request,
and **in that**
- the frequency F₂ is about double the frequency F₁,
- the output of the amplifier (18) is connected to one input of the first downstream bandpass filter (20) and to one input of the second downstream bandpass filter (21),
- a value of the current consumed by the amplifier is regulated as a function of a measurement of a value representing a noise power at output of the amplifier.

2. - A reception device according to claim 1, **characterised in that**, to obtain a variation in the frequencies F₁ and/or F₂, each filter has a varicap diode (26, 27) with one anode and one cathode, and
**in that** the anode and/or the cathode of these varicap diodes are connected to a power supply device (28), in particular a digital/analog converter with one control input connected to the microprocessor (22).

3. - A device according to one of the claims 1 and 2, **characterised in that**
- the frequency F₁ of the first downstream bandpass filter (20) is a frequency included in a frequency band ranging from 869 MHz to 960 MHz,
- the frequency F₂ of the second downstream bandpass filter (21) is a frequency included in a frequency band ranging from 1805 MHz to 1990 MHz.

4. - Method for the reception of a radiofrequency signal, especially in a mobile telephone, in which:
- the radio-frequency signal is received at an antenna (2) and is amplified with a low-noise amplifier (18),
**characterised in that**
- this radiofrequency signal is transmitted to the input of a first downstream bandpass filter (20) centred on a variable centre frequency F₁ and a second downstream bandpass filter (21) centred on a variable centre frequency F₂, the frequency F₂ being about double the frequency F₁,
- a value of the frequency F1 and/or F2 is selected by means of a microprocessor (22) controlled by a programme (23),
- a value representing a noise power at output of the amplifier (18) is measured,
- a value of current and/or bias voltage of the amplifier (18) is regulated as a function of this representative value.

5. -Method of reception of a radio-frequency signal according to claim 4 **characterised in that**
- the method is implemented in a mobile telephone (1).

## Patentansprüche

1. Vorrichtung für den Empfang (17) eines Funksignals in einem Mobiltelefon (1), bestehend aus:
- einer Antenne (2),
- einem geräuscharmen Verstärker (18) mit einem Eingang und einem Ausgang, und
- einer nachgeschalteten Bandpassfiltervorrichtung (20, 21),
- der Eingang des geräuscharmen Verstärkers (18) ist über ein Leiterkabel (19) direkt mit der Antenne (2) verbunden,
- die nachgeschaltete Bandpassfiltervorrichtung enthält einen ersten nachgeschalteten Bandpassfilter (20), der auf eine Mittenfrequenz F₁ zentriert ist, und einen zweiten nachgeschalteten Bandpassfilter (21), der auf eine Mittenfrequenz F₂ zentriert ist,
**dadurch gekennzeichnet, dass** sie Mittel enthält, um die Frequenzen F₁ und/ oder F₂ variabel zu gestalten, sowie einen Mikroprozessor (22) zur Auswahl eines Wertes von F₁ und/ oder F₂ auf Anfrage,
und **dadurch**, dass:
- die Frequenz F₂ in etwa dem Doppelten der Frequenz F₁ entspricht,
- der Ausgang des Verstärkers (18) mit einem Eingang des ersten nachgeschalteten Bandpassfilters (20) und einem Eingang des zweiten nachgeschalteten Bandpassfilters (21) verbunden ist,
- ein Stromwert, der vom Verstärker verbraucht wird, in Abhängigkeit von einer Messung des repräsentativen Wertes einer Geräuschleistung am Ausgang des Verstärkers geregelt wird.

2. Empfangsvorrichtung nach Anspruch 1, die **dadurch gekennzeichnet ist, dass** jeder Filter zum Variieren der Frequenzen F₁ und/ oder F₂ eine Kapazitätsdiode (26, 27) mit einer Anode und einer Kathode enthält, und
**dadurch**, dass die Anode und/ oder die Kathode dieser Kapazitätsdioden mit einer Einspeisevorrichtung (28), vor allem mit einem Digital-Analog-Wandler verbunden sind, mit einem Steuerungseingang, der mit dem Mikroprozessor (22) verbunden ist.

3. Empfangsvorrichtung nach einem der Ansprüche 1 und 2, die **dadurch gekennzeichnet ist, dass**
- die Frequenz F₁ des ersten nachgeschalteten Bandpassfilters (20) eine Frequenz ist, die sich in einem Frequenzband von 869 MHz bis 960 MHz befindet,
- die Frequenz F₂ des zweiten nachgeschalteten Bandpassfilters (21) eine Frequenz ist, die sich in einem Frequenzband von 1.805 MHz bis 1.990 MHz befindet.

4. Verfahren zum Empfang eines Funksignals, speziell in einem Mobiltelefon, in dem
- man das Funksignal mit einer Antenne (2) empfängt, und es mittels eines geräuscharmen Verstärkers (18) verstärkt,
**dadurch gekennzeichnet, dass**
- man dieses Funksignal auf den Eingang eines ersten nachgeschalteten Bandpassfilters (20) überträgt, der auf eine variable Mittenfrequenz F₁ zentriert ist, und auf einen zweiten nachgeschalteten Bandpassfilter (21), der auf eine variable Mittenfrequenz F₂ zentriert ist, wobei die Frequenz F₂ in etwa dem Doppelten der Frequenz F₁ entspricht,
- man anhand eines Mikroprozessors (22), der von einem Programm (23) gesteuert wird, einen Wert der Frequenz F₁ und/ oder F₂ auswählt,
- man einen repräsentativen Wert einer Geräuschleistung am Ausgang des Verstärkers (18) misst,
- und man einen Stromwert und/ oder einen Spannungswert zur Polarisierung des Verstärkers (18) in Abhängigkeit von diesem repräsentativen Wert regelt.

5. Verfahren zum Empfang eines Funksignals nach Anspruch 4, das **dadurch gekennzeichnet ist, dass**
- dieses Verfahren in einem Mobiltelefon (1) Anwendung findet.
